**Europäisches Patentamt**

**European Patent Office**

**Office européen des brevets**

(19)

(11) Veröffentlichungsnummer: **0 317 760**
**B1**

(12) **EUROPÄISCHE PATENTSCHRIFT**

(45) Veröffentlichungstag der Patentschrift:
27.06.90

(51) Int. Cl.⁵: **G01B 7/28**

(21) Anmeldenummer: 88117378.5

(22) Anmeldetag: 19.10.88

(54) **Rotierkopf zum Abtasten der Oberfläche zylindrischer Prüfteile.**

(30) Priorität: **19.11.87 DE 3739190**

(43) Veröffentlichungstag der Anmeldung:
**31.05.89 Patentblatt 89/22**

(45) Bekanntmachung des Hinweises auf die Patenterteilung:
**27.06.90 Patentblatt 90/26**

(84) Benannte Vertragsstaaten:
**FR GB IT SE**

(56) Entgegenhaltungen:
**FR-A- 1 582 215**
**US-A- 2 200 827**
**US-A- 3 757 208**
**US-A- 4 053 827**

(73) Patentinhaber: **Institut Dr. Friedrich Förster Prüfgerätebau GmbH & Co. KG, Postfach 1564 In Laisen 70, D-7410 Reutlingen 1(DE)**

(72) Erfinder: **Häberlein, Peter, Oferdinger Strasse 23, D-7410 Reutlingen 24(DE)**
Erfinder: **Trautmann, Wolfgang, Hans-Baltisberger-Strasse 7, D-7410 Reutlingen 1(DE)**

**Beschreibung**

Die Erfindung betrifft einen Rotierkopf zum Abtasten der Oberfläche zylindrischer Prüfteile gemäß dem ersten Teil von Patentanspruch 1. Derartige Rotierköpfe werden in der zerstörungsfreien Prüftechnik u.a. eingesetzt zur Prüfung von langgestrecktem Halbzeug, wie Drähten, Stangen oder Rohren auf Fehler. Dabei kommen vorwiegend Wirbelstrom- oder Streuflußsonden zur Anwendung, es sind jedoch auch ohne weiteres andere Anwendungen denkbar, etwa die von Ultraschallsensoren. Grundsätzlich können zwei Arbeitsweisen unterschieden werden: die berührungslose und die schleifende Abtastung. Bei der ersteren wird zur abzutastenden Oberfläche ein möglichst konstanter Abstand eingehalten. Dies erreicht man durch einen Anschlag, an den der Prüfkopf anschlägt und der so den Abstand zwischen Prüfkopf bzw. Prüfsonde und Oberfläche bestimmt, solange die Lage der Oberfläche konstant bleibt. Wo die Schwankungen des Abstandes, die sich zwangsläufig aus Unrundheit, Exzentrizität oder Durchmessertoleranzen des Prüfteiles ergeben, nicht akzeptiert werden können oder wo es auf minimalen Abstand ankommt, wird mit schleifender Abtastung gearbeitet. Bei einer solchen steht eine dazu besonders befähigte Gleitfläche, hinter der sich der Prüfsensor befindet, in unmittelbarem Kontakt mit der Oberfläche des Prüfteiles und macht alle Bewegungen dieser Oberfläche mit.

Aus US-PS 4 053 827 ist ein Rotierkopf mit 4 Prüfköpfen bekannt, die um eine senkrecht zur Rotierachse ausgerichtete Drehachse schwenkbar sind und deren Abstand von der Rotierachse zur Anpassung an unterschiedliche Prüfteildurchmesser durch eine gemeinsame Verstelleinrichtung einstellbar ist. Nachteilig ist bei diesem Rotierkopf die zur Rotierachse senkrechte Anordnung der Drehachsen der Prüfköpfe. Diese führt zu einer unerwünscht weiten Ausdehnung der Rotierköpfe in der Längsrichtung des Prüfgutes. Außerdem erlaubt der notwendigerweise große Hebelarm der Prüfköpfe bei dieser Anordnung nur eine begrenzte Umlaufgeschwindigkeit.

Bei einem aus US-PS 2 200 827 bekannten Prüfkopf sind 4 um eine parallel zur Rotierachse ausgerichtete Drehachse schwenkbare Zentrierarme vorgesehen, die am umlaufenden Rotierkopf befestigt sind und die mit einer Gleitfläche am vorderen Ende des Zentrierarmes das Prüfgut an seinem Umfang berühren, um es zu führen. Zu diesem Zweck sind die rückwärtigen Enden der Zentrierarme durch Laschen so miteinander verbunden, daß die Bewegungen der Gleitflächen in radialer Richtung zwangsläufig gleich sind. Dadurch kann die Einstellung der 4 Zentrierarme auf einen bestimmten Prüfteildurchmesser an einem der Zentrierarme durchgeführt und festgelegt werden. Bei jeder Änderung der Einstellung verschiebt sich auf den Gleitflächen die Berührungslinie mit der Prüfgutoberfläche. Dies hat bei der Verwendung der Arme zur Zentrierung des Prüfgutes keine Bedeutung. Würde man jedoch die Zentrierarme als Prüfköpfe einsetzen, mit in die Gleitfläche eingebauten Prüfsensoren, so würde sich bei jeder Einstellungsänderung auch die Lage der Prüfsensoren gegenüber der Berührungslinie verschieben. Damit würde sich aber auch der Abstand der Prüfsensoren von der Prüfteiloberfläche ändern, was wiederum unerwünschte Änderungen der Empfindlichkeit der Prüfsensoren zur Folge hätte. Dieser Fehler wird um so schwerwiegender, je kleiner der Hebelarm des Prüfkopfes, d.h. der Radius des vom Prüfsensor beschriebenen Kreises gewählt wird. Andererseits ist man geneigt, insbesondere wenn eine größere Anzahl von Prüfköpfen benötigt wird, aus Raumgründen den Hebelarm nicht zu groß auszuführen.

Aus diesem Grunde stellt sich die Erfindung die Aufgabe, einen Rotierkopf der eingangs genannten Art zu schaffen, der diesen Nachteil nicht aufweist.

Diese Aufgabe wird durch einen Rotierkopf gemäß Anspruch 1 gelöst.

Neben der aufgabengemäßen Beseitigung einer unerwünschten Fehlermöglichkeit ergibt sich durch die Erfindung eine wesentliche Vereinfachung in der Handhabung des Rotierkopfes. Dies führt insbesondere bei einer größeren Anzahl von Prüfköpfen und bei häufigem Wechsel der Prüfteildurchmesser zu einer erheblichen Einsparung von Arbeitszeit. Vorteilhafte Ausgestaltungen der Erfindung sind in den abhängigen Ansprüchen wiedergegeben.

Im folgenden wird anhand von zwei Ausführungsbeispielen und mit Hilfe von Figuren die Erfindung näher erläutert. Es zeigen im einzelnen:

Figur 1 den Aufriß eines Rotierkopfes

Figur 2 einen Schnitt durch denselben entlang der Linie II–II.

Figur 3 den Aufriß eines Rotierkopfes einer alternativen Ausführung

Figur 4 einen Schnitt durch denselben entlang der Linie IV–IV

Figur 5 einen Schnitt entlang der Linie V–V.

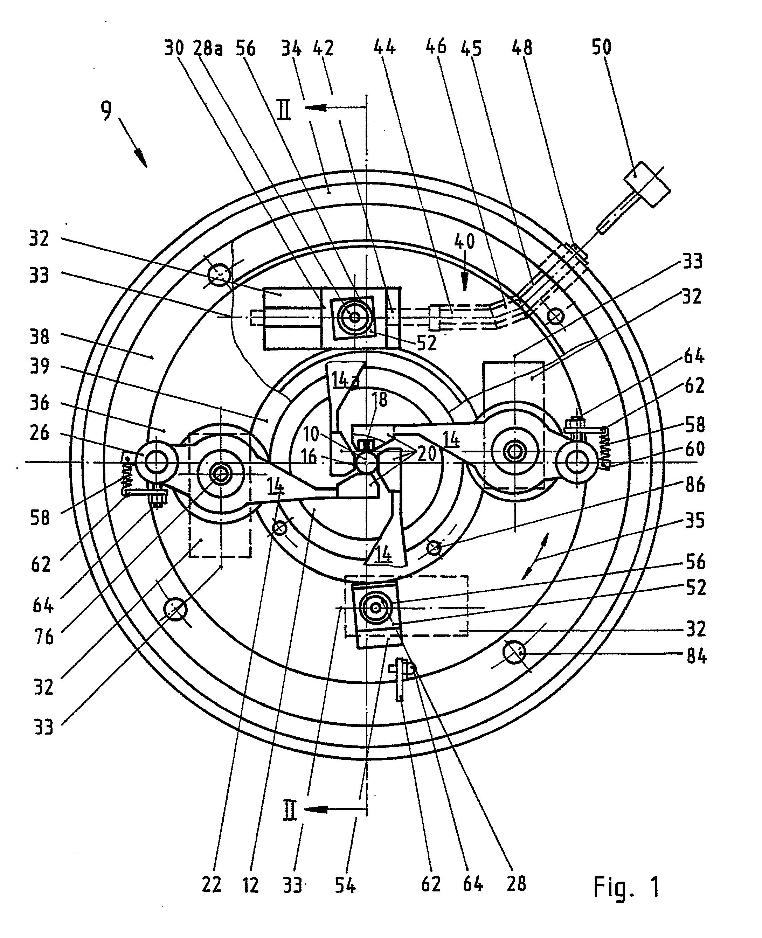

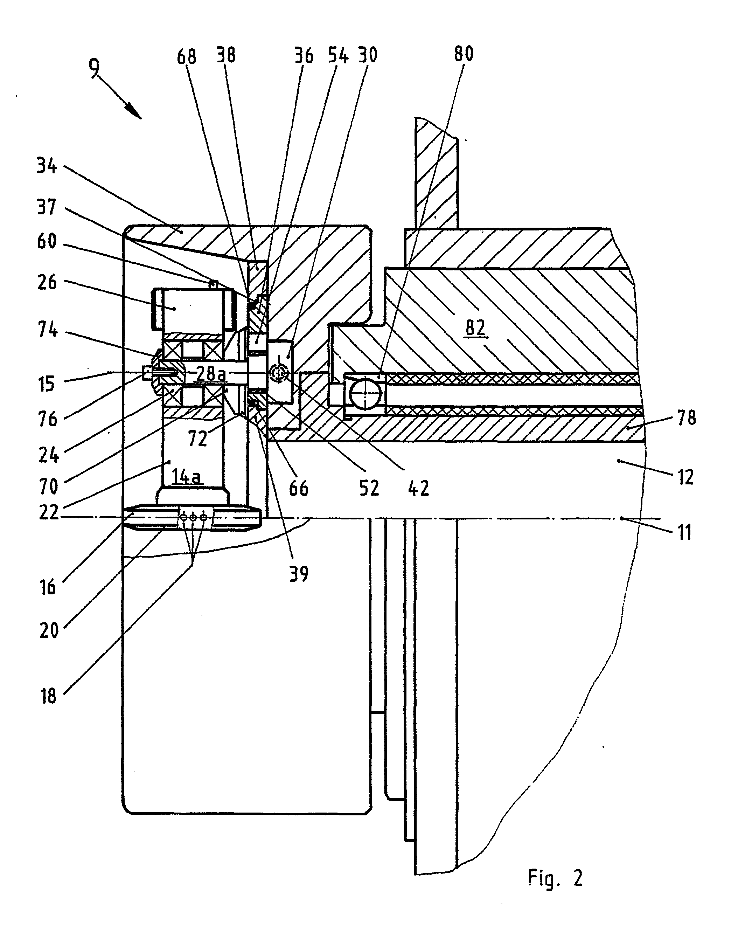

In den Figuren 1 und 2 ist ein Rotierkopf 9 mit vier Prüfköpfen (14a, 14) in schleifender Arbeitsweise dargestellt. Der Einfachheit halber sind zugehörige Teile, die zum Verständnis der Erfindung nicht benötigt werden, nur angedeutet oder weggelassen worden, wie Gehäuse, Rotierlager, Antrieb und dgl.

Ein Prüfteil, eine Stange (10), durchläuft im Prüfbetrieb entlang der Rotierachse 11 des Rotierkopfes 9 eine Durchlaßöffnung 12, und wird dabei zentrisch geführt von nicht dargestellten Zentriermitteln an der Einlaß- und Auslaßseite des Rotierkopfes. Vier gleich aufgebaute Prüfköpfe 14 a, 14 sind drehbar um eine Drehachse 15 um die Durchlaßöffnung 12 herum angeordnet und tangieren mit einer Gleitfläche 16 die Oberfläche des Prüfteiles 10. Einer Mantellinie auf der Oberfläche des Prüfteiles 10 benachbart, von der letzteren nur getrennt durch eine hier nicht dargestellte verschleißfeste Schicht, wird ein Satz von Wirbelstromsonden 18 von jedem Prüfkopf 14 a, 14 beherbergt. Hierzu dient ein Sondenhalter 20, der durch einen Sondenhebel 22 mit einer Lageranordnung 24 und einem Gegengewicht 26 verbunden ist. Gelagert sind die Prüfköpfe in einem Bolzen 28 a, 28, dessen vierkantiger Kopf 30 in einer Nut 32 mit einer Längsachse 33 im Grundkörper 34 des Rotierkopfes geführt ist. Die rechteckige Nut 32 und ihre Achse 33 erstrecken sich in einer Richtung, die senkrecht auf einer Ebene steht, die das Prüfteil 10 bei richtiger Einstellung in der vom Prüfkopf 14 berührten Mantellinie tangiert. Am besten ist dies im oberen Teil von Figur 1 zu erkennen, wo der Prüfkopf 14 a, eine Führungsscheibe 36 und zwei Halteringe 38, 39 teilweise weggebrochen sind. Prüfkopf 14 a besitzt als einziger eine Verstelleinrichtung 40, die aus einer mit dem Kopf 30 korrespondierenden Spindel 42 und einer Kardanwelle 44, 45 mit Kardangelenk 46 besteht. Durch einen in eine Öffnung 48 passenden Sechskantschlüssel 50 läßt sich mithin der Bolzen 28 a des Prüfkopfes 14 a, und somit die Drehachse 15 dieses Prüfkopfes entlang der Achse 33 in der Nut 32 verschieben. Das Kardangelenk 46 erlaubt die Herausführung der Welle 44 in radialer Richtung. Damit wird verhindert, daß beim Betätigen der Verstelleinrichtung 40 mit Schlüssel 50 eine Kraft in Drehrichtung des leichtgängigen Rotierkopfes ausgeübt wird und dieser in Bewegung gesetzt wird. Die Bewegung des Bolzens 28 a und des Prüfkopfes 14 a wird auf die übrigen Bolzen 28 bzw. Prüfköpfe 14 durch die Steuerscheibe 36 übertragen. Dies geschieht, wie am besten in Figur 1 am unteren ebenfalls teilweise weggebrochenen Prüfkopf 14 ersichtlich, über Kulissensteine 52, die in Fenstern 54 der Steuerscheibe 36 gleiten und mit ihren Bohrungen 56 durch die Bolzen 28 geführt werden. Die rechteckigen Fenster 54 sind in radialer Richtung orientiert und geben so Raum für eine radiale Komponente der Bewegung aller Bolzen 28. Eine Verschiebung von Bolzen 28 a gemäß Achse 33 bewirkt auf diese Weise eine Verdrehung der Steuerscheibe 36 gemäß Pfeil 35 und die gewünschte Verschiebung aller Prüfköpfe 14 entlang der Achsen 33.

Die auf den vorderen Teil des Prüfkopfes 14 während der Rotation des Rotierkopfes einwirkenden Zentrifugalkräfte werden durch das Gegengewicht 26 weitgehend aufgehoben. Eine Feder 58, die an einem Ansatz 60 am rückwärtigen Ende des Prüfkopfes 14 angreift, drückt die Gleitfläche 16 in definierter Weise an die Prüfteiloberfläche. Die Feder 58 ist rückseitig an einem Blech 62 befestigt, das auf der Steuerscheibe 36 angebracht ist. Eine einstellbare Schraube 64 dient als Anschlag für den Prüfkopf 14 und legt dessen Ruhelage fest, insbesondere für den Fall der berührungsfreien Abtastung.

Die Steuerscheibe 36 wird gehalten und gelagert durch die beiden Halteringe 38, 39, die mittels Schrauben 84, 86 befestigt sind und jeweils einen Übergriff 37 aufweisen. An den beiden Übergriffen 37 sind Dichtringe 66, 68 angebracht, die die Steuerscheibe 36 an ihrem inneren und äußeren Durchmesser nach außen abdichten. Zur Abdichtung der Fenster 54 ist eine Abdeckscheibe 70 gedacht, die über dem Kulissenstein 52 auf dem Bolzen 28 sitzt und der eine Tellerfeder 72 aus Kupferberyllium und ein Filzring (nicht sichtbar) zugeordnet sind. Durch die beschriebenen Maßnahmen ist das bewegliche Steuerungssystem nach außen gegen den Zutritt von Verunreinigungen in einfacher Weise wirksam geschützt. Die Prüfköpfe 14 sind gegen Herausfallen durch eine Deckscheibe 74 und eine Schraube 76 abgesichert.

Der Rotierkopf insgesamt wird von einem Rohr 78 getragen, das mittels zweier Lager 80 (nur eines ist dargestellt) in einem Gehäuse 82 ruht.

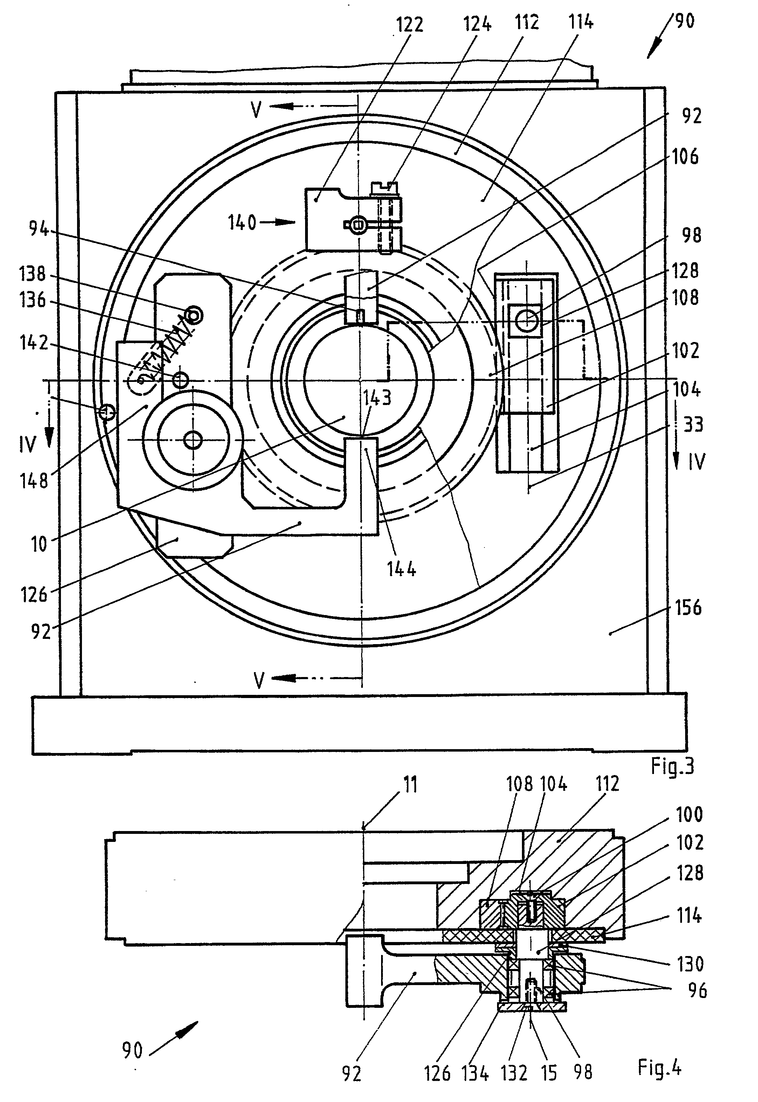

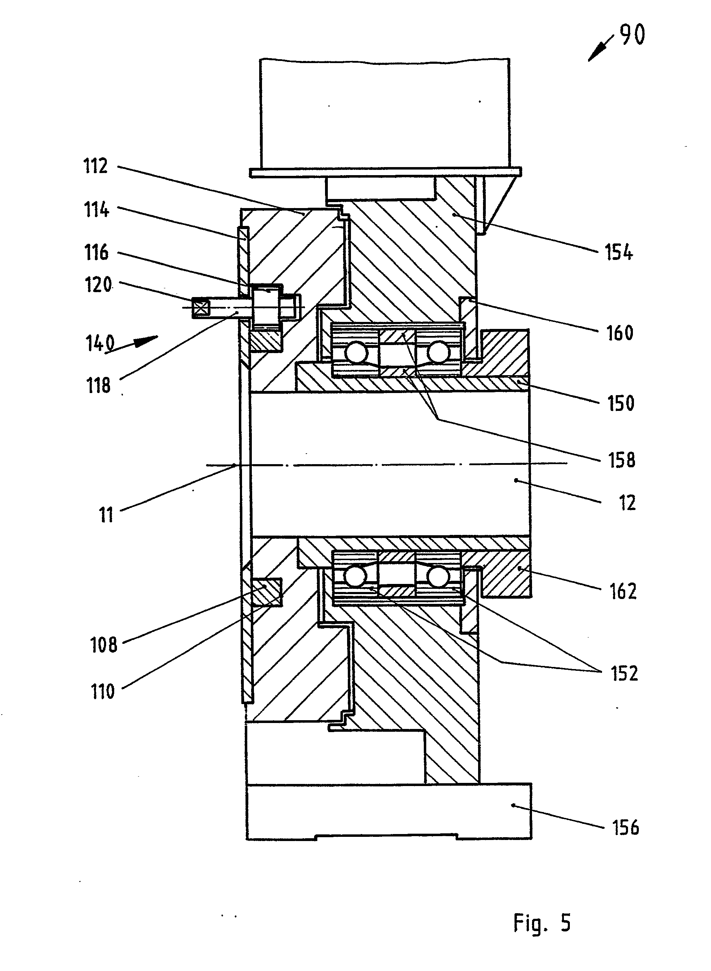

Die Figuren 3, 4 und 5 stellen einen um die Rotierachse 11 und ein Prüfteil 10 sich drehenden Rotierkopf 90 mit zwei Prüfköpfen 92 dar, deren Verstellung in abgewandelter Weise bewerkstelligt wird. Die Prüfköpfe 92, die mit Sonden 94 ausgestattet sind, sind um eine Drehachse 15 drehbar gelagert. Dazu dienen zwei Kugellager 96 und ein Bolzen 98, der mittels Schraube 100 an einem Gleitkörper 102 befestigt ist. Der Gleitkörper 102 wird in einer Nut 104 entlang der Bahn 33 geführt. Er besitzt an seiner Flanke eine Zahnstange 106, die mit einem Zahnkranz 108 im Eingriff steht. Dieser ist in einer kreisförmigen Nut 110 im Grundkörper 112 gelagert und durch eine Scheibe 114 abgedeckt. Ein ebenfalls im Grundkörper 112 gelagertes Ritzel 116 steht gleichfalls im Eingriff mit dem Zahnkranz 108. Über eine kraftschlüssig mit dem Ritzel 116 verbundene Welle 118, die an ihrem Ende einen Vierkant 120 aufweist, läßt sich der Zahnkranz 108 verdrehen und lassen sich somit die Drehachsen 15 der Prüfköpfe 92 entlang der Bahnen 33 verschieben. Eine gewählte Einstellung kann durch eine Klemmvorrichtung 122 mit einer Schraube 124 gegen ungewollte Verstellung festgelegt werden. Soll die Verstelleinrichtung 140, die aus Ritzel 116, Welle 118 und Klemmvorrichtung 122 besteht, selbsthemmend sein, so kann sie in einem Schneckenantrieb bestehen, der in den Zahnkranz 108 eingreift. Ebenso kann auch, ähnlich wie beim zuvor beschriebenen Rotierkopf 9, eine Spindel einen der beiden Gleitkörper 102 antreiben.

Die Scheibe 114, durch die der Gleitkörper 102, die Nut 104 und der Zahnkranz 108 abgedeckt sind, ist im rechten Teil von Figur 3 entfernt worden, um den Blick auf die darunter liegenden Teile freizugeben. Entfernt wurden hier aus dem gleichen Grund auch der Prüfkopf 92 und ein Deckel 126. Der letztere ruht verdrehungssicher an einem Vierkant 128 des Bolzens 98. Er dient dazu, ein nicht sichtbares Langloch in der Scheibe 114, durch das der Bolzen 98 nach außen eintritt, gegen das Eindringen von Staub zu schützen und besitzt zu diesem Zwecke eine Dichtung 130 aus Filz. Eine mit einer Schraube 132 am Bolzen 98 befestigte Deckscheibe 134 sichert den Prüfkopf 92 und schützt die Kugellager 96 vor Schmutz.

Die Arbeitsweise des Prüfkopfs 92 weicht von der des zuvor beschriebenen Prüfkopfes 14 ab. Der erstere wird von einer Feder 136, die an einem Stift 138 im Deckel 126 und an einem Ansatz des Prüfkopfs 92 angreift, in seiner rückwärtigen Ruhelage an einem Anschlag 142 gehalten. Bei der betriebsmäßigen Rotation des Rotierkopfes 90 wird durch die Fliehkraft der Sondenhalter 144 des Prüfkopfes 92 mit der Gleitfläche 143 an die Oberfläche des Prüfteils 10 bzw. an einen Anschlag 146 gedrückt. Zu diesem Zweck ist am Prüfkopf 92 ein entsprechend dimensionierter zusätzlicher Hebel 148 vorgesehen. Die an ihm zur Wirkung kommende Zentrifugalkraft überwiegt die am Sondenhalter 144 angreifende rückwärtsgerichtete Zentrifugalkraft und die diese unterstützende Kraft der Feder 136, so daß ein ausreichender Andruck zustande kommt.

Der Grundkörper 112 des Rotierkopfes 90 ist starr verbunden mit einem Rohr 150, dessen Bohrung die Durchlaßöffnung 12 des Rotierkopfes definiert. Das Rohr 150 ist durch zwei Kugellager 152 in einem Montagekörper 154 gelagert, der seinerseits von einem Gehäuse 156 gehalten und umschlossen wird. Die beiden Lager 152 stützen sich gegeneinander ab mit Hülsen 158 und werden gesichert durch einen Ring 160. Ein am Rohr 150 fixierter Flansch 162 dient zum Befestigen einer Antriebsscheibe (nicht dargestellt), über die der Rotierkopf in Rotation versetzt werden kann.

**Patentansprüche**

1. Rotierkopf zum Abtasten der Oberfläche zylindrischer Prüfteile (10), mit einem um eine Rotierachse (11) rotierenden Grundkörper (34, 112), mit mindestens zwei Prüfköpfen (14, 92), die drehbar um eine zur Rotierachse (11) parallele Drehachse (15) in einem Bolzen (28, 28a; 128) gelagert sindund jewils mindestens einen der Oberfläche der Prüfteile (10) benachbarten Prüfsensor (18, 94) aufweisen und mit einer Verstelleinrichtung (40, 140), mit deren Hilfe die Lage aller Prüfungen (14, 92) gegenüber der Oberfläche des Prüfteils (120) gemeinsam verstellt werden kann, dadurch gekennzeichnet, daß die Drehachsen (15) der Prüfköpfe (14, 92) gegenüber dem Grundkörper (34, 112) verschoben werden können, daß zu diesem Zweck der Bolzen (28, 28a; 128) unmittelbar mit einem in einer Nut (32, 104) geführten Gleitkörper (52, 102) nverbunden ist und daß die Nut (32, 104) linear und senkrecht zu einer Flche verläuft., die die Oberfläche des Prüfteils (10) in einer dem Prüfsensor (18, 94) gegenüberliegenden Mantellinie tangiert.

2. Rotierkopf nach Anspruch 1, dadurch gekennzeichnet, daß ein Steuerelement (36, 108) vorgesehen ist, das in einem gegenüber dem Grundkörper (34, 112) und koaxial zu ihm verdrehbaren Körper besteht, dessen Verdrehung eine Verschiebung der Gleitkörper (52, 102) in den Nuten bewirkt und daß das Steuerelement (36, 108) von der Verstelleinrichtung (40, 140) angetrieben wird.

3. Rotierkopf nach Anspruch 1 oder 2, dadurch gekennzeichnet, daß erste (28a) und zweite (28) Bolzen zur Lagerung eines ersten Prüfkopfes (14a) bzw. des/der weiteren Prüfköpfe (14) vorgesehen sind, deren Gleitkörper (52) in den Nuten (32) geführt sind und daß der Gleitkörper (52) des ersten Bolzens (28a) mittels einer Spindel (42) in der Nut (32) verschoben werden kann.

4. Rotierkopf nach Anspruch 3, dadurch gekennzeichnet, daß die Spindel (42) über ein flexibles Antriebselement (44, 45, 46), z.B. eine Kardanwelle, betätigt werden kann, deren anzutreibendes Ende (45) radial zur Rotationsachse (11) ausgerichtet ist.

5. Rotierkopf nach einem der Ansprüche 3–4, dadurch gekennzeichnet, daß die ersten (28a) und zweiten (28) Bolzen jeweils mit dem Steuerelement (36) über Gleitkrper (52) in der Form von Kulissensteinen verbunden sind, die zur Durchführung einer radialen Bewegung der Bolzen (28a, 28) in entsprechenden Fenstern (54) des Steuerelementes (36) geführt sind.

6. Rotierkopf nach einem der Ansprüche 2–5, dadurch gekennzeichnet, daß das Steuerelement (36) eine kreisförmige Kontur und einen ebenfalls kreisförmigen, zxur letzteren koaxialen Ausschnitt hat und durch Übergriffe (37) am Grundkörper (34) gelagert ist.

7. Rotierkopf nach Anspruch 6, dadurch gekennzeichnet, daß das Steuerelement (36) an seinem Außen- und seinem Innendurchmesser gegenüber dem Grundkrper (34) durch Dichtringe (66, 68) abgedichtet ist.

8. Rotierkopf nach Anspruch 1 oder 2, dadurch gekennzeichnet, daß das Steuerelement (108) durch einen Zahnkranz realisiert ist und daß die in den Nuten (104) geführten Gleitkörper (102) jeweils eine Zahnstange (106) aufweisen, die mit dem Zahnkranz des Steuerelements (108) im Eingriff steht.

(9. Rotierkopf nach Anspruch 8, dadurch gekennzeichnet, daß die Verstelleinrichtung (140) ein Ritzel (116) besitzt, das mit dem Zahnkranz (108) im Eingriff steht.

10. Rotierkopf nach Anspruch 9, dadurch gekennzeichnet, daß die Verstelleinrichtung (140) durch eine Klemmvorrichtung (122) festgelegt werden kann.

**Claims**

1. Rotary head for tracing the surfaces of cylindrical test pieces (10), with a base body (34, 112) rotating about a rotary axis (11), with at least two test heads (14, 92) which are mounted rotatably about an axis of rotation (15) parallel to the rotary axis (11) on a pin (28, 28a; 128) and each comprise at least one test sensor (18, 94) adjacent the surface of the test piece (10) and with an adjusting device (40, 140), with the aid of which the position of all test heads (14, 92) relative to the surface of the test piece (10) can be adjusted together, characterized in that the axes of rotation (15) of the test heads (14, 92) can be displaced relative to the base body (34, 112), in that to this end the pin (28, 28a; 128) is connected directly to a sliding body (52, 102) guided in a groove (32, 104) and in that the groove (32, 104) runs straight and perpendicular to a surface which is tangential to the surface of the test piece (10) at a circumferential line opposite to the test sensor (18, 94).

2. Rotary head according to claim 1, characterized in that a control element (36, 108) is provided, consisting of body rotatable relative to the base body (34, 112), coaxially therewith, and whose rotation effects a displacement of the sliding bodies (52, 102) in the grooves (32, 104), and in that the control element (36, 108) is driven by the adjusting device (40, 140).

3. Rotary head according to claim 1 or 2, characterized in that first (28a) and second (28) pins are provided for positioning a first test head (14a) and the further test head(s) respectively, the sliding bodies (52) of which are guided in the grooves (32), and in that the sliding body (52) of the first pin (28a) can be displaced in that groove (32) by means of a spindle (42).

4. Rotary head according to claim 3, characterized in that the spindle (42) can be operated by a flexible drive element (44, 45, 46), e.g. a Cardan shaft, the driving end (45) of which is directe radially to the rotary axis (11).

5. Rotary head according to one of claims 3–4, characterized in that the first (28a) and second (28) pins are each connected to the control element (36) through sliding bodies (52) in the form of link blocks, which are guided in corresponding windows (54) of the control element (36) to effect a radial movement of the pins (28a, 28).

6. Rotary head according to one of claims 2–5, characterized in that the control element (36) has a circular contour and a likewise circular section coaxial with the latter and is mounted by overlaps (37) on the base body (34).

7. Rotary head according to claim 8, characterized in that the control element (36) is sealed relative to the base body (34) at its outer and its inner diameter by sealing rings (66, 68).

8. Rotary head according to claim 1 or 2, characterized in that the control element (108) is formed by a toothed ring and in that the sliding bodies (102) guided in the grooves (104) each have a toothed rod (106) which is engagement with the toothed ring of the control element (108).

9. Rotary head according to claim 8, characterized in that the adjusting device (140) has a pinion (116) which is in engagement with the toothed ring of the control element (108).

10. Rotary head according to claim 9, characterized in that the adjusting device (140) can be arrested by a clamping device (122).

**Revendications**

1. Tête de mesure rotative pour la palpation de surfaces cylindriques de pièces à contrôler (10), comportant un bâti (34, 112) pouvant tourner autour d'un axe de rotation (11), comportant au moins deux têtes de contrôle (14, 92), montées sur paliers dans un tourillon (28, 28a, 128) et pouvant tourner autour d'un axe de pivotement (15) parallèle à l'axe de rotation (11), et présentant chacune au moins un palpeur de contrôle (18, 94) s'approchant de la surface extérieure de la pièce à contrôler (10), et comportant un dispositif de réglage (40, 140) à l'aide duquel on peut régler simultanément la position de toutes les têtes de contrôle (14, 92) par rapport à la surface extérieure de la pièce à contrôler (10), caractérisée en ce que les axes de pivotement (15) des têtes de contrôle (14, 92) peuvent subir une translation par rapport au bâti (34, 112), en ce que, dans ce but, le tourillon (28, 28a; 128) est relié directement avec un organe de glissement (52, 102) guidé dans une rainure (32, 104) et en ce que la rainure (32, 104) est disposée linéairement et parallèlement à une surface qui est tangente à la surface extérieure de la pièce à contrôler (10) suivant une génératrice se trouvant en face du palpeur de contrôle (18, 94).

2. Tête rotative suivant la revendication 1, caractérisée en ce qu'un organe de commande (36, 108) est prévu, qui est constitué d'un corps pouvant tourner par rapport au bâti (34, 112) et coaxial avec lui, dont la rotation provoque une translation des organes de lissement (52, 102) dans les rainures (32, 104), et en ce que l'organe de commande (36, 108) est entraîné par le dispositif de réglage (40, 140).

3. Tête rotative suivant la revendication 1 ou 2, caractérisée en ce que des premiers (28a) et deuxièmes (28) tourillons sont prévus pour le montage sur palier d'une première tête de contrôle (14a) et d'une ou d'autres têtes de contrôle (14), dont des organes de glissement (52) sont guidés dans les rainures (32) et en ce que l'on peut faire glisser l'organe de glissement (52) du premier tourillon (28a) dans la rainure (32) au moyen d'une tige filetée (42).

4. Tête rotative suivant la revendication 3, caractérisée en ce que la tige filetée (42) peut être actionnée par un organe d'entraînement flexible (44, 45, 46), par exemple un arbre à la cardan, dont l'extrémité à entraîner est orientée radialement par rapport à l'axe de rotation 11.

5. Tête rotative suivant l'une quelconque des revendications 3 ou 4, caractérisée en ce que les premier (28a) et deuxièmes tourillons (28) sont reliés chacun avec l'organe de commande (36) par l'intermédiaire d'organes de glissement (52), sous la forme de plaquettes de coulissement qui sont guidées, pour l'exécution d'un mouvement radial des tourillons (28a, 28), dans des fenêtres (54) adaptées de l'organe de commande (36).

6. Tête rotative suivant l'une quelconque des revendications 2 à 5, caractérisée en ce que l'organe de commande (36) présente un contour circulaire et une section également circulaire, coaxiale avec le précédant, et est monté sur paliers dans le bâti (34) au moyen de collerettes (37).

7. Tête rotative suivant la revendication 6, caractérisée en ce que l'organe de commande (36) est rendu étanche au moyen de bagues d'étanchéité (66, 68), par rapport au bâti (34), sur son diamètre extérieur et sur son diamètre intérieur.

8. Tête rotative suivant la revendication 1 ou 2, caractérisée en ce que l'organe de commande (108) est réalisé au moyen d'une couronne dentée et en ce que les organes de glissement (102) guidés dans les rainures (104) présentent chacun une crémaillère (106) qui engrène avec la couronne dentée de l'organe de commande (108).

9. Tête rotative suivant la revendication 8, caractérisée en ce que le dispositif de réglage (140) possède un pignon denté (116) qui engrène avec la couronne dentée de l'organe de commande (108).

10. Tête rotative suivant la revendication 9, caractérisée en ce que le dispositif de réglage (140) peut être bloqué au moyen d'un dispositif de blocage (122).

Fig. 1

Fig. 2

EP 0 317 760 B1

Fig.3

Fig.4

EP 0 317 760 B1

Fig. 5